# EUROPEAN PATENT APPLICATION

(11) **EP 1 986 095 A1**
(43) Date of publication of application: **29.10.2008**
(21) Application number: 07123054.4
(22) Date of filing: 12.12.2007
(51) Int. Cl.: G06F 9/44

(54) **Method and apparatus for providing help upon user's wrong button manipulation**

(30) Priority: 16.03.2007 KR 20070026270
(71) Applicant: Samsung Electronics Co., Ltd., Suwon-si, Gyeonggi-do 442-742 (KR)
(72) Inventor: Jun, Yoon-woo, Seoul (KR)
(74) Representative: Brandon, Paul Laurence

(57) **Abstract**

A method and apparatus for providing help upon a user's wrong button manipulation, the method including: obtaining information on a user's button manipulation; checking whether an error pattern is detected in the button manipulation, using the information on button manipulation; and if the error pattern is detected, providing help information corresponding to the detected error pattern. According to the present invention, information on a user's button manipulation in a device is obtained, an error or malfunction pattern due to the user's wrong button manipulation is detected, and help information is provided in order to allow the user to return to the right process or prevent the error next time.

## Description

### BACKGROUND OF THE INVENTION

### 1. Field of the Invention

The present invention relates to methods and apparatus for detecting an error or malfunction pattern due to a user's wrong button manipulation, in a device having buttons used to control functions and input instructions.

### 2. Description of the Related Art

Recently, devices such as electronic equipment have gained in integrated functions and complexity. Accordingly, it is very inconvenient for a user to spend a long time to understand the operating manual of a device. Even after the user has spent a long time understanding the manual, they may have difficulty completely understanding every function of the device. As a result, if several button manipulations are required to operate functions of the device, the user usually uses trial and error to understand the button manipulations. Thus, much time is required, or at the worst, the manual has to be read again in order to operate the device.

### SUMMARY OF THE INVENTION

Preferred embodiments of the present invention aim to provide a method and apparatus for providing help upon a user's wrong button manipulation so as to allow the user to use a product more conveniently by immediately providing guidance for an error or a malfunction which occurs frequently during the operation of the product.

According to an aspect of the present invention, there is provided a method of providing help upon a user's wrong button manipulation, the method including: obtaining information on a user's button manipulation; checking whether an error pattern is detected in the button manipulation, using the information on button manipulation; and if the error pattern is detected, providing help information corresponding to the detected error pattern.

The checking of whether an error pattern is detected may include determining whether an error in button manipulation has occurred, using a device operating manual; if it is determined that an error in button manipulation has occurred, determining whether an error pattern corresponding to the error in button manipulation exists; and if it is determined that the error pattern corresponding to the error in button manipulation exists, detecting an operating information list corresponding to the error pattern, using the device operating manual.

If it is determined that the error pattern corresponding to the error in button manipulation does not exist, the determining of whether the error pattern corresponding to the error in button manipulation exists may further include updating the error patterns to recognize the current error in button manipulation as a new error pattern.

The providing of help information corresponding to the detected error pattern may include generating help information with reference to the operating information list and the device operating manual; and providing help information to the user.

The providing of help information to the user may include displaying help information on a display window.

The providing of help information to the user may include outputting help information with an alarm sound.

The method may further include updating information on the button manipulation in accordance with the providing of help information, wherein an operating information list corresponding to the error pattern may be preferentially detected using the updated information on the button manipulation.

According to another aspect of the present invention, there is provided an apparatus for providing help upon a user's wrong button manipulation, the apparatus including: a button manipulation information obtaining unit which obtains information on a user's button manipulation; an error pattern check unit which checks whether an error pattern is detected in the button manipulation, using the information on the button manipulation; a manual database which stores a device operating manual; and a help information provision unit which provides help information corresponding to the detected error pattern using the device operating manual, if the error pattern is detected.

The error pattern check unit may include an error determination unit which determines whether an error in button manipulation has occurred, using the device operating manual; an error pattern database which stores information on error patterns; an error pattern determination unit which determines whether an error pattern corresponding to the error in button manipulation exists, using the information on error patterns of the error pattern database, if it is determined that the error in button manipulation has occurred; and an operating information list detection unit which detects an operating information list corresponding to the error pattern using the device operating manual, if it is determined that the error pattern corresponding to the error in button manipulation exists.

The error pattern check unit may further include an error pattern update unit which stores the error pattern corresponding to the error in button manipulation in the error pattern database as a new error pattern, if it is determined that the error pattern corresponding to the error in button manipulation does not exist.

The help information provision unit may include a help information generation unit which generates help information with reference to the operating information list and the device operating manual; and a help information interface unit which provides help information to the user.

The help information interface unit may display help information on a display window.

The help information interface unit may output help information with an alarm sound.

The apparatus may further include a button manipulation information update unit which updates information on the user's button manipulation performed after help information is provided, wherein the operating information list detection unit preferentially detects operating information list corresponding to the error pattern using the updated information on the button manipulation.

### BRIEF DESCRIPTION OF THE DRAWINGS

The present invention will become more apparent by describing in detail exemplary embodiments thereof with reference to the attached drawings in which:

FIG. 1 is a flowchart illustrating a method of providing help upon a user's wrong button manipulation, according to an embodiment of the present invention;

FIG. 2 is a flowchart illustrating operation 102 of FIG. 1, according to an embodiment of the present invention;

FIG. 3 is a flowchart illustrating operation 104 of FIG. 1, according to an embodiment of the present invention; and

FIG. 4 is a block diagram of an apparatus for providing help upon a user's wrong button manipulation, according to an embodiment of the present invention.

### DETAILED DESCRIPTION OF THE INVENTION

A method of providing help upon a user's wrong button manipulation, according to an embodiment of the present invention, will now be described in detail by explaining embodiments of the invention with reference to the attached drawings.

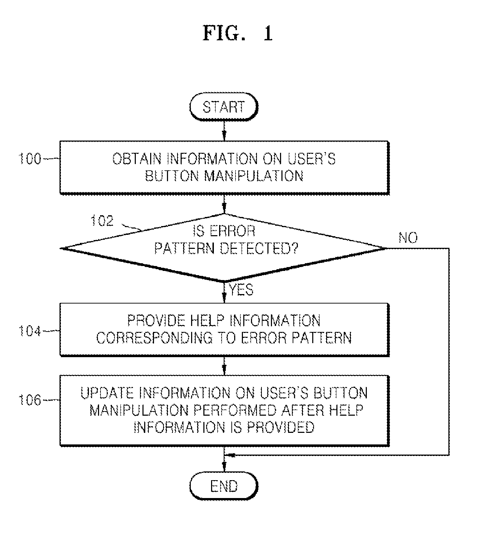

FIG. 1 is a flowchart illustrating a method of providing help upon a user's wrong button manipulation, according to an embodiment of the present invention.

First, information on a user's button manipulation is obtained in operation 100. If the user manipulates buttons of a device to activate a function of the device, information on the types of buttons manipulated by the user, the order of manipulation of the buttons, the manipulation time, and the like, is obtained as the information on the button manipulation.

Then, it is checked whether an error pattern is present in the button manipulation, using the information on the button manipulation in operation 102.

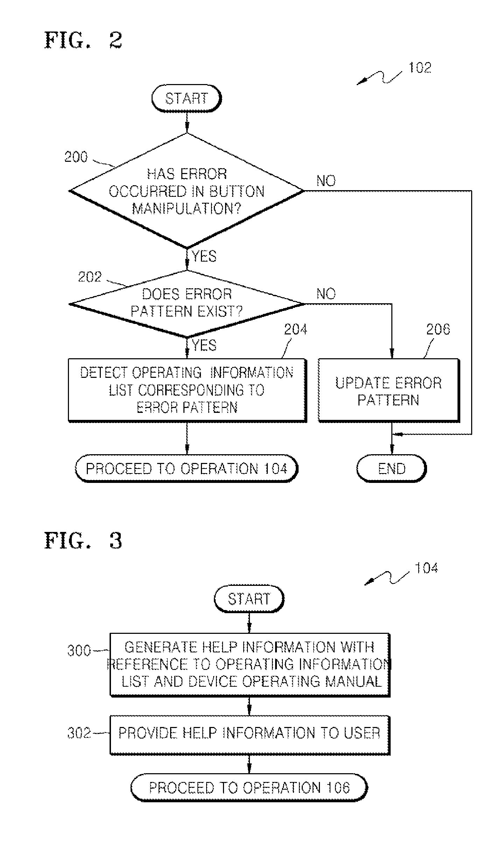

FIG. 2 is a flowchart illustrating operation 102 of FIG. 1, according to an embodiment of the present invention.

It is determined whether an error in button manipulation has occurred using a device operating manual in operation 200. The device operating manual contains help information which includes operation methods for each function of the device. Information of the device operating manual is stored in a predetermined memory as a database when the device is manufactured. It is determined whether the order of button manipulation is identical to an order of button manipulation described in the device operating manual, or whether the button manipulation is completed in a predetermined time period.

If it is determined that an error in button manipulation has occurred, it is determined whether an error pattern corresponding to the error in button manipulation exists, in operation 202. If the error in button manipulation has occurred, operation 202 is performed in order to determine the type of error. In order to determine the error pattern, information on error patterns of the user's wrong button manipulation is previously stored in a database of the device. Examples of the error patterns are redundant repeated button manipulation, omitted button manipulation, unintended button manipulation for initialization, and excessive button manipulation time. The information on the error patterns can be updated whenever the user makes an error in button manipulation.

If the error pattern corresponding to an error in button manipulation exists, an operating information list corresponding to the error pattern is detected using the device operating manual, in operation 204. The fact that the error pattern corresponding to the error in button manipulation exists means that information on an error type which indicates the type of error in button manipulation exists. The operating information list includes information on the function that the user wanted. For example, it is assumed that the device executes a certain function when first through fourth buttons are manipulated sequentially. When the user manipulates the first, second and third buttons sequentially, other functions which can be executed by manipulating the first, second and third buttons sequentially, as well as the function which can be executed by manipulating the first through fourth buttons sequentially, are detected in the device operating manual as the operating information list corresponding to this type of error pattern.

A list of error patterns can be displayed to the user, the user can select one of the error patterns on the list, and an operating information list corresponding to the error pattern selected by the user can be detected.

However, if the error pattern corresponding to the error in button manipulation does not exist in operation 202, the error pattern corresponding to the error in button manipulation is updated as a new error pattern in operation 206. The fact that the error pattern corresponding to the error in button manipulation does not exist means that the error pattern corresponding to the current error in button manipulation does not exist in the database in which the information on the error patterns is stored. In this case, by storing the current error pattern in button manipulation in the database in which the information on the error patterns is stored, as a new error pattern, the new error pattern can be used next time this type of error pattern is detected.

Referring back to FIG. 1, if the error pattern is detected in operation 102, help information corresponding to the detected error pattern is provided in operation 104. The fact that the error pattern is detected means that the operating information list corresponding to the error pattern is detected. If the operating information list is detected, help information is generated using the operating information list, and then provided to the user.

FIG. 3 is a flowchart illustrating operation 104 of FIG. 1, according to an embodiment of the present invention.

The help information is generated with reference to the operating information list and the device operating manual in operation 300. The operating information list includes information on a function of the device which the user intended to activate by the button manipulation. Detailed manual information on the function which the user intended to activate is included in the device operating manual. Accordingly, by checking the device operating manual corresponding to the operating information list, help which is required in order to execute the function that the user wanted can be generated. Examples of help information includes comments such as "For screen setting, please manipulate as below." or "If you have information you want below, please move to the information by simply using up and down buttons."

Meanwhile, in operation 204 of FIG. 2, if the user selects one of the error patterns on the displayed list, help information can be generated with reference to the operating information list corresponding to the selected error pattern.

Then, help information is provided to the user in operation 302. The help information can be displayed on a display window or can be output with an alarm sound.

Meanwhile, referring back to FIG. 1, after operation 104, information on the user's button manipulation performed after help information is provided is updated in operation 106. The updated information on button manipulation is used in order to check which function the user wanted when the operating information list corresponding to the error pattern was detected. Next time operation 204 is performed, and thus the operating information list corresponding to the same error pattern is detected, more accurate help information can be provided to the user by using the updated information on the button manipulation.

The above-described method according to an embodiment of the present invention can also be embodied as computer readable code/instructions/programs. Specifically, a computer readable recording medium having recorded thereon a computer program for executing a method including obtaining information on a user's button manipulation; checking whether an error pattern is detected in button manipulation, using the information on the button manipulation; and if the error pattern is detected, providing help information corresponding to the detected error pattern, is another aspect of the present invention.

For example, the embodiments of the present invention can be implemented in general-use digital computers that execute programs using a computer readable recording medium. Examples of the computer readable recording medium include magnetic storage media (e.g. ROM, floppy disks, hard disks, etc.), optical recording media (e.g. CD-ROMs, or DVDs), and storage media such as carrier waves (e.g. transmission through the Internet). Functional programs, code, and code segments for accomplishing the present invention can be easily construed by programmers skilled in the art to which the present invention pertains.

An apparatus for providing help upon a user's wrong button manipulation, according to an embodiment of the present invention, will now be described in detail by explaining embodiments of the invention with reference to the attached drawings.

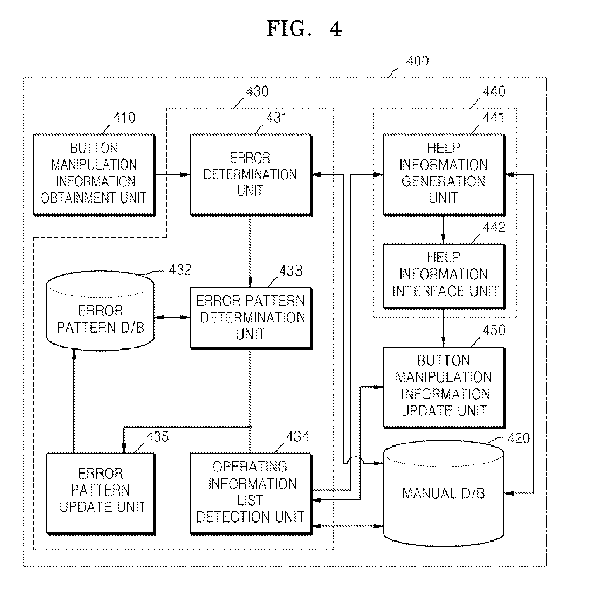

FIG. 4 is a block diagram of an apparatus 400 for providing help upon a user's wrong button manipulation, according to an embodiment of the present invention.

Referring to FIG. 4, the apparatus 400 includes a button manipulation information obtaining unit 410, a manual database 420, an error pattern check unit 430, a help information provision unit 440, and a button manipulation information update unit 450.

The button manipulation obtaining unit 410 obtains information on a user's button manipulation and outputs the information to the error pattern check unit 430. If the user manipulates buttons of a device, information on the types of buttons manipulated by the user, the button manipulation order, the manipulation time, and the like, is obtained as information on button manipulation.

The manual database 420 stores a device operating manual. The device operating manual includes help information which includes operation methods for each function of a device.

The error pattern check unit 430 checks whether an error pattern is detected in the button manipulation, using the information on button manipulation, and outputs the check result to the help information provision unit 440. For this, the error pattern check unit 430 includes an error determination unit 431, an error pattern database 432, an error pattern determination unit 433, an operating information list detection unit 434, and an error pattern update unit 435.

The error determination unit 431 determines whether an error in button manipulation has occurred, using the device operating manual, and outputs the result of the determination to the error pattern determination unit 433. The device operating manual is stored in the manual database 420.

The error determination unit 431 receives the information on button manipulation from the button manipulation obtaining unit 410 and then determines whether an error in button manipulation has occurred, using the information on the manipulation order of the buttons or the manipulation time included in the device operating manual stored in the manual database 420, in response to the information on button manipulation.

The error pattern database 432 stores information on error patterns. In order to determine the error pattern, the information on the error patterns of a user's wrong button manipulation is stored in the error pattern database 432. Examples of the error patterns are redundant repeated button manipulation, omitted button manipulation, unintended button manipulation for initialization, and excessive button manipulation time. Here, the information on the error patterns can be updated whenever the user makes an error in button manipulation.

If the error pattern determination unit 433 receives the result that an error in button manipulation has occurred, from the error determination unit 431, the error pattern determination unit 433 determines whether an error pattern corresponding to the error in button manipulation exists, using the information on the error patterns stored in the error pattern database 432, and outputs the result of determination to the operating information list detection unit 434 or the error pattern update unit 435. If an error in button manipulation has occurred, the error pattern determination unit 433 can determine the type of error. The fact that the error pattern corresponding to the error in button manipulation exists means that information on an error type which indicates the type of the error in button manipulation exists. The error pattern determination unit 433 outputs the result that the error pattern corresponding to the error in button manipulation exists, to the operating information list detection unit 434. Meanwhile, the error pattern determination unit 433 outputs the result that the error pattern corresponding to the error in button manipulation does not exist, to the error pattern update unit 435.

If the operating information list detection unit 434 receives the result that the error pattern corresponding to the error in button manipulation exists, from the error pattern determination unit 433, the operating information list detection unit 434 detects an operating information list corresponding to the error pattern using the device operating manual, and outputs the result of detection to help information provision unit 440. The operating information list includes information on the function that the user wanted.

If the error pattern update unit 435 receives the result that the error pattern corresponding to the error in button manipulation does not exist, from the error pattern determination unit 433, the error pattern update unit 435 stores the error pattern corresponding to the error in button manipulation in the error pattern database 432 as a new error pattern. The fact that the error pattern corresponding to the error in button manipulation does not exist means that the error pattern corresponding to the current error in button manipulation does not exist in the error pattern database 432 in which the information on the error patterns is stored. In this case, by storing the current error pattern of button manipulation into the error pattern database 432 as a new error pattern, the new error pattern can be used next time this type of error is detected.

If the error pattern is detected, help information provision unit 440 provides help information corresponding to the detected error pattern using the device operating manual, to the button manipulation information update unit 450. For this, the help information provision unit 440 includes a help information generation unit 441 and a help information interface unit 442.

The help information generation unit 441 generates help information with reference to the operating information list detected by the operating information list detection unit 434 and the device operating manual of the manual database 420, and then outputs the help information to help information interface unit 442. The operating information list includes information on the function that the user wanted. Detailed manual information on that function is included in the device operating manual. Accordingly, by checking the device operating manual corresponding to the operating information list, the help information generation unit 441 generates the help which is required in order to execute the function that the user wanted.

The help information interface unit 442 provides help information to the user. The help information interface unit 442 may display the help information on a display window. Meanwhile, the help information interface unit 442 may output help information with an alarm sound.

The button manipulation information update unit 450 updates information on the user's button manipulation performed after help information is provided. When the user performs button manipulation in accordance with the help information, the button manipulation information update unit 450 stores information on the button manipulation performed by the user in accordance with help information on the error pattern, in a memory, as the information on button manipulation.

Then, the operating information list detection unit 434 preferentially detects operating information list corresponding to the error pattern using the updated information on the button manipulation. The operating information list detection unit 434 uses the updated information on button manipulation in order to check which function the user wanted, when the operating information list corresponding to the error pattern is detected. Next time the operating information list detection unit 434 detects the operating information corresponding to the same error pattern, more accurate help information can be provided to the user by using the updated information on button manipulation.

A method and apparatus for providing help upon a user's wrong button manipulation according to embodiments of the present invention is used in a device having buttons used to control functions and input instructions, to obtain information on a user's button manipulation, detect an error or incorrect pattern due to the user's wrong button manipulation, and provide help information in order to allow the user to return to the right process or prevent the error in advance. Thus, preferred embodiments of the present invention allow the user to use a device more conveniently by immediately providing guidance for an error or a malfunction which occurs frequently during the operation of the device. Also, optimized information can be provided to the user by continuously storing new information on the user's button manipulation. Furthermore, the cost of after-service of the device is reduced.

While the present invention has been particularly shown and described with reference to exemplary embodiments thereof, it will be understood by those of ordinary skill in the art that various changes in form and detail may be made therein without departing from the spirit and scope of the invention as defined by the appended claims. The exemplary embodiments should be considered in a descriptive sense only, and not for purposes of limitation. Therefore, the scope of the invention is defined not by the detailed description of the invention but by the appended claims, and all differences within the scope will be construed as being included in the present invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of providing help upon a user's wrong button manipulation, the method comprising:
obtaining information on a user's button manipulation;
checking whether an error pattern is detected in the button manipulation, using the information on button manipulation; and
if the error pattern is detected, providing help information corresponding to the detected error pattern.

2. The method of claim 1, wherein the checking of whether the error pattern is detected comprises:
determining whether an error in button manipulation has occurred, using a device operating manual;
if it is determined that the error in button manipulation has occurred, determining whether the error pattern corresponding to the error in button manipulation exists; and
if it is determined that the error pattern corresponding to the error in button manipulation exists, detecting an operating information list corresponding to the error pattern, using the device operating manual.

3. The method of claim 2, wherein if it is determined that the error pattern corresponding to the error in button manipulation does not exist, the determining of whether the error pattern corresponding to the error in button manipulation exists further comprises updating the error pattern corresponding to the error in button manipulation as a new error pattern.

4. The method of claim 2, wherein the providing of help information corresponding to the detected error pattern comprises:
generating help information with reference to the operating information list and the device operating manual; and
providing help information to the user.

5. The method of claim 4, wherein the providing of help information to the user comprises displaying the help information on a display window.

6. The method of claim 4 or claim 5, wherein the providing of help information to the user comprises outputting help information with an alarm sound.

7. The method of any one of claims 2-6, further comprising updating information on the button manipulation in accordance with the providing of help information, wherein operating information list corresponding to the error pattern is preferentially detected using the updated information on the button manipulation.

8. A computer readable recording medium having recorded thereon a computer program for executing a method of providing help upon a user's wrong button manipulation, the method comprising:
obtaining information on a user's button manipulation;
checking whether an error pattern is detected in the button manipulation, using the information on button manipulation; and
if the error pattern is detected, providing help information corresponding to the detected error pattern.

9. An apparatus (400) for providing help upon a user's wrong button manipulation, the apparatus comprising:
a button manipulation information obtaining unit (410) which obtains information on a user's button manipulation;
an error pattern check unit which checks whether an error pattern is detected in the button manipulation, using the information on the button manipulation;
a manual database (420) which stores a device operating manual; and
a help information provision unit (440) which provides help information corresponding to the detected error pattern using the device operating manual, if the error pattern is detected.

10. The apparatus (400) of claim 9, wherein the error pattern check unit (430) comprises:
an error determination unit (431) which determines whether an error in button manipulation has occurred, using the device operating manual;
an error pattern database (432) which stores information on error patterns;
an error pattern determination unit (433) which determines whether an error pattern corresponding to the error in button manipulation exists, using the information on error patterns of the error pattern database, if it is determined that the error in button manipulation has occurred; and
an operating information list detection unit (434) which detects an operating information list corresponding to the error pattern using the device operating manual, if it is determined that the error pattern corresponding to the error in button manipulation exists.

11. The apparatus (400) of claim 10, wherein the error pattern check unit (430) further comprises an error pattern update unit (435) which stores the error pattern corresponding to the error in button manipulation in the error pattern database (432) as a new error pattern, if it is determined that the error pattern corresponding to the error in button manipulation does not exist.

12. The apparatus (400) of claim 10 or claim 11, wherein the help information provision unit (440) comprises:
a help information generation unit which generates help information with reference to the operating information list and the device operating manual; and
a help information interface unit (442) which provides help information to the user.

13. The apparatus (400) of claim 12, wherein the help information interface unit (442) displays help information on a display window.

14. The apparatus of claim 12 or claim 13, wherein the help information interface unit (442) outputs help information with an alarm sound.

15. The apparatus of any one of claims 10-14, further comprising a button manipulation information update unit (450) which updates information on the user's button manipulation performed after help information is provided, wherein the operating information list detection unit preferentially detects operating information list corresponding to the error pattern using the updated information on the button manipulation.
